# EUROPÄISCHE PATENTANMELDUNG

(11) **EP 2 543 494 A2**
(43) Veröffentlichungstag der Anmeldung: **09.01.2013**
(21) Anmeldenummer: 12169255.2
(22) Anmeldetag: 24.05.2012
(51) Int. Cl.: B29C 53/50, B29C 53/82, B29C 70/32

(54) **Verfahren und Vorrichtung zur Herstellung eines faserverstärkten Kunststoffbauteils**

(30) Priorität: 06.07.2011 DE 102011078709
(71) Anmelder: Bayerische Motoren Werke Aktiengesellschaft, 80809 München (DE)
(72) Erfinder: Idikurt, Mustafa, 80339 München (DE); Skardelly, Thomas, 85737 Ismaning (DE)

(57) **Zusammenfassung**

Die Erfindung betrifft eine Vorrichtung und ein Verfahren zum Herstellen eines Bauteils (10) aus faserverstärken Kunststoff mit den Schritten: Anordnung eines Kernes (11) in einer Faseraufbringvorrichtung insbesondere in einer Wickel- oder Flechtvorrichtung, Aufbringen von Fasern (12) auf den Kern (11), wobei die Fasern (12) mit einer Kunststoffmatrix imprägniert sind, und Aushärten der Kunststoffmatrix durch Beaufschlagen des mit Fasern (12) versehenen Kernes (11) mit Druck und/oder Temperatur, dadurch gekennzeichnet, dass der Kern (11) eine Oberfläche mit mindestens einem formvariablen Bereich (13) aufweist, der während des Aufbringens der Fasern (12) eine erste vorbestimmte geometrische Form aufweist und nach dem Aufbringen der Fasern (12) in eine zumindest abschnittsweise konkave geometrische Form überführt wird.

## Beschreibung

Die Erfindung betrifft ein Verfahren zum Herstellen eines faserverstärkten Kunststofibauteils mit den Schritten Aufbringen von Fasern auf einen Kern, wobei an den Fasern eine Kunststoffmatrix vorgesehen ist und Aushärten der Kunststoffmatrix durch Beaufschlagen des mit Fasern versehenen Kerns mit Druck und/oder Temperatur. Die Erfindung betrifft auch eine Vorrichtung zum Herstellen eines faserverstärkten Kunststoffbauteils.

Zur Herstellung großer faserverstärkter Kunststoffteile werden im Stand der Technik insbesondere Kohlenstofffasern, Aramid- und Glasfasern verwendet. Eine Kohlenstofffaser hat einen Durchmesser von etwa 5 - 8 µm. Üblicherweise werden 1.000 bis 24.000 Einzelfasern, sogenannte Filamente, zu einem Bündel, ein sogenanntes Roving, zusammengefasst, das auf Spulen gewickelt wird. Die Weiterverarbeitung dieser Rovings erfolgt z.B. auf Web-, Flecht- oder Wirkmaschinen zu textilen Strukturen. Diese Gewerbe werden zugeschnitten, meist in mehreren Lagen in Form gelegt und in einer Kunststoffmatrix getränkt. Umgesetzt wird dieses Verfahren in der sogenannten Prepreg-Technik oder in CFK-Handlaminat-Verfahren. Die Prepregs wie auch die Handlaminate werden daraufhin unter erhöhter Temperatur ausgehärtet. Sie können mit der Heißpresstechnik oder der Autoklav-Technik verarbeitet werden, bei denen durch den Druck der Faservolumenanteil erhöht wird. Der Aushärtung kann ein Temperprozess folgen, durch den die vollständige Vernetzung sichergestellt wird.

Die Prepreg-Technologie hat jedoch den Nachteil, dass zunächst ein Gewebe, Geflecht oder Gelege mit einer Kunststoffmatrix hergestellt werden muss, das anschließend geschnitten und gelegt werden muss. Dabei müssen diese Prepregs auch ständig aufwändig gelagert werden. Diese Verarbeitungstechniken erfordern zudem einen hohen Investitionsaufwand für Autoklaven, Legeroboter sowie für die gekühlte Lagerhaltung der Halbzeuge. Ferner besteht auch die Gefahr, dass Bauteile mit Lufteinschlüssen erzeugt werden.

Alternativ hierzu ist aus dem Stand der Technik die sogenannte Wickeltechnik bekannt. Bei dieser Technik wird ein Kern oder Wickeldorn mit den genannten Rovings umwickelt. Die Rovings umfassen dabei eine oder mehrere Fasern als Kern und eine Kunststoffmatrix, die aus duroplastischen oder thermoplastischen Material ausgebildet sein kann. Nach der vollständigen Umwicklung des Kerns wird die Matrix ausgehärtet, um das fertige Faserbauteil zu bilden. Ein solches Verfahren ist beispielsweise aus der DE 10 2004 003 749 A1 bekannt.

Die Wickeltechnik hat den Nachteil, dass bislang nur Bauteile herstellbar sind mit konvex gekrümmten äußeren Oberflächen, beispielsweise Rohre. Ferner müssen im Wendebereich der Fasern aufwändig hergestellte Nadelkränze bereit gestellt werden, um ein ungewolltes verrutschen der Fasern während des Wickelns zu vermeiden.

Ausgehend von diesem Stand der Technik macht es sich die vorliegende Erfindung zur Aufgabe, ein vereinfachtes Verfahren sowie eine vereinfachte Vorrichtung anzugeben, mit dem die Nachteile des Standes der Technik überwunden werden. Ferner ist es Aufgabe der Erfindung, ein Verfahren und eine Vorrichtung anzugeben, mit dem Kunststoffbauteile herstellbar sind, die zumindest abschnittsweise eine konkav gekrümmte äußere Oberfläche aufweisen.

Diese Aufgabe wird durch ein Verfahren und eine Vorrichtung mit den Merkmalen der unabhängigen Ansprüche gelöst. Die abhängigen Ansprüche stellen vorteilhafte Ausführungen der Erfindung dar.

Zur Lösung dieser Aufgabe schlägt die Erfindung ein Verfahren zum Herstellen eines Bauteils aus faserverstärktem Kunststoff vor mit den Schritten, Anordnung eines Kerns in einer Faseraufbringvorrichtung, Aufbringen von Fasern auf den Kern, wobei die Fasern mit einer Kunststoffmatrix imprägniert sein können und Aushärten der Kunststoffmatrix durch Beaufschlagen des mit Fasern versehenen Kerns mit Druck und/oder Temperatur. Weiterhin kann der Kern eine Oberfläche mit mindestens einem formvariablen Bereich aufweisen, der während des Aufbringens der Fasern eine erste vorbestimmte geometrische Form aufweist und nach dem Aufbringen der Fasern in eine zumindest abschnittsweise konkave geometrische Form überführt werden kann. Im Sinne der Erfindung ist als Kern ein strukturelles Bauteil oder eine strukturelle Baugruppe zu verstehen, die mit Fasern vollständig umwickelt oder umflochten werden kann. Der Kern kann dabei ein- oder mehrteilig aufgebaut sein. Eine Faseraufbringvorrichtung kann Wahlweise als eine Wickelmaschine oder Flechtmaschine ausgebildet sein. Die Erfindung bietet den Vorteil, dass die Herstellung von komplexen faserverstärkten Kunststoffbauteilen, insbesondere von Fahrzeugchassis mit konkaven und konvexen Oberflächen, auf besonders einfache Weise realisierbar ist.

Weiterhin kann der formvariable Bereich der Oberfläche des Kerns während des Aufbringens der Fasern zumindest abschnittsweise eine konvexe geometrische Form aufweisen und während des Aushärtens der Kunststoffmatrix eine zumindest abschnittsweise konkave Form aufweisen. Mit anderen Worten, während des Umwickelns oder des Umflechtens des Kerns wird der formvariable Bereich des Kerns in einer konvexen geometrischen äußeren Form gehalten, nach dem Umwickeln oder Umflechten in eine konkave geometrische Form überführt und während des Aushärtens der Kunststoffmatrix in einer zumindest abschnittsweise konkaven äußeren Form gehalten.

Darüber hinaus kann der formvariable Bereich der Oberfläche durch einen im wesentlichen fluiddichten Behälter ausgebildet werden, der an dem Kern angeordnet und in dem ein Fluid vorgesehen ist und durch Beaufschlagen des Fluids mit Druck der Behälter in eine zumindest abschnittsweise konvexe äußere Form überführt werden und durch Erzeugen von Unterdruck der Behälter in eine zumindest abschnittsweise konkave äußere Form überführt werden.

Weiterhin kann die Länge einer geodätischen Linie des formvariablen Bereichs der Oberfläche in konvexer Form der Länge einer geodätischen Linie des Bereichs der Oberfläche in konkaver Form entsprechen. Im Sinne der Erfindung ist eine geodätische Linie als eine Linie zu verstehen, die zwei Punkte des formvariablen Bereichs miteinander verbindet, wobei sie entlang der Oberfläche des formvariablen Bereichs verläuft, unabhängig welche äußere geometrische Form dieser aufweist.

Darüber hinaus kann ein Positionierungsmittel vorgesehen sein, zum Positionieren zumindest eines Abschnitts der Fasern während des Umwickelns oder Umflechtens des Kerns.

ln einem weiteren Aspekt betrifft die Erfindung eine Vorrichtung zum Herstellen eines Bauteils aus faserverstärktem Kunststoff, mit einem Kern, dessen Oberfläche mindestens einen formvariablen Bereich aufweist, wobei auf den Kern Fasern aufbringbar sind, dadurch gekennzeichnet, dass der formvariable Bereich während des Aufbringens der Fasern eine erste vorbestimmte geometrische Form aufweist und nach dem Aufbringen der Fasern in eine zumindest abschnittsweise konkave geometrische Form überführbar ist. Das Aufbringen der Fasern auf den Kern erfolgt durch dessen Umwicklung oder Umflechtung, so dass auf der Oberfläche des Kerns ein Gelege, Gewebe oder Geflecht aus Fasern erzeugt wird.

Darüber hinaus kann der formvariable Bereich des Kerns aus einem im Wesentlichen fluiddichten Behälter ausgebildet sein.

Darüber hinaus kann in dem fluiddichten Behälter ein Fluid vorgesehen sein, wobei durch Beaufschlagen des Fluids mit Druck der formvariable Bereich in eine zumindest abschnittsweise konvexe Form und durch Erzeugen von Unterdruck der formvariable Bereich in eine zumindest abschnittsweise konkave Form überführbar ist.

Weiterhin kann die Länge einer geodätischen Linie des formvariablen Bereichs in konvexer Form der Länge derselben geodätischen Linie des formvariablen Bereichs in konkaver Form entsprechen.

Zusätzlich kann an dem Kern ein Positionierungsmittel vorgesehen sein, zum Positionieren mindestens eines Abschnitts der Fasern während des Umwickelns oder des Umflechtens des Kerns. Dadurch werden die Fasern an einem oder mehreren Ihrer Bereiche gehalten bzw. fixiert, so dass die Fasern in einer definierten Position bzw. Ausrichtung auf der Oberfläche des Kerns abgelegt werden. Mit Hilfe der Positionierungsmittel kann ein ungewolltes Verrutschen der Fasern während des Umwickel oder Umflechten des Kerns verhindert werden.

Die Erfindung bietet den Vorteil, dass Bauteile aus Faserverbundwerkstoffen mit komplexer Geometrie großindustriell wirtschaftlich herstellbar sind. Darüber hinaus bietet sie bei der Konstruktion hohe Gestaltungsfreiheit. Durch sehr straff und eng aneinander liegende Rovings können Fasergelege erzeugt werden, die eine hohe Festigkeit im Verbundbauteil ergeben. Im Vergleich zur Matrix ist dann der Faservolumenanteil wesentlich höher. Ein weiterer Vorteil dieser Wickeltechnik ist einerseits die kostengünstige Herstellung von textilen Faserhalbzeugen, da die Materialien ohne Aufbereitung direkt zuführt werden können. Ferner ist auch die Aufbewahrung und Zusteuerung der Fasern bzw. der Rovings im Prozess deutlich einfacher. Nicht zuletzt kann relativ einfach auf bauteilspezifische Anforderungen eingegangen werden.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind. Es zeigen in schematischer Darstellung
- Figur 1: ein faserverstärktes Kunststoffbauteil in Form eines Fahrzeugchassis;
- Figur 2: ein Kernbasiselement;
- Figur 3: einen erfindungsgemäßen Kern;
- Figur 4: einen erfindungsgemäßen Kern während des Umwickelns;
- Figur 5: eine Schnittansicht durch ein erfindungsgemäßes Kunststoffbauteil;
- Figur 6: eine vergrößerte Darstellung des Details D aus Figur 5 und
- Figur 7: eine schematische Darstellung eines Positionierungsmittels.

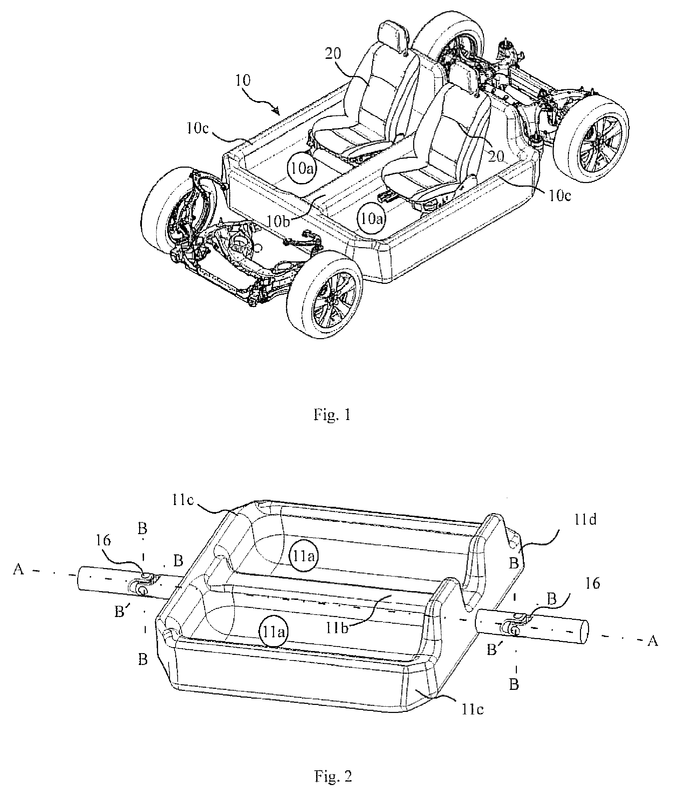

In Figur 1 ist ein erfindungsgemäßes faserverstärktes Kunststoffbauteil 10 als Fahrzeugchassis eines Sportwagens dargestellt. Das Chassis 10 weist zwei konkav geformte Oberflächenbereiche 10a auf, die als Einbuchtungen dargestellt sind, in denen die Sitze 20 angeordnet sind. Zwischen den Sitzen 20 weist das Kunststoffbauteil 10 einen konvex geformten Abschnitt 10b auf, der als Mitteltunnel dienen kann, beispielsweise für die Unterbringung einer Kardanwelle. Im äußeren Bereich des Kunststoffbauteils 10 sind weitere konvexe Bereiche 10c vorgesehen, die als Umrandung ausgebildet sind und dem Fahrzeugchassis 10 eine ausreichende Stabilität verleihen.

Zur Herstellung des faserverstärkten Bauteils 10, beispielsweise in Form eines Kunststoffchassis, wird ein Kernbasiselement 11d - wie in Figur 2 dargestellt - verwendet. Analog zum Fahrzeugchassis 10 weist das Kernbasiselement 11 d konkav geformte Bereiche 11 a und konvex ausgebildete Bereiche 11 bund 11 c. Das Kernbasiselement 11d kann beispielsweise als Spritzgusskunststoffkern, als Sandkern, als geschäumter Kern oder als metallischer im Innenhochdruckumformverfahren hergestellter Kern vorliegen. Optional kann das Kernbasiselement 11d bereits Inserts für spätere Anbindungspunkte zu weiteren Bauteilen integriert haben. Solche Inserts können insbesondere Innengewinde, Buchsen oder sonstige Klips-und/oder Steckverbindungen sein.

Prinzipiell ist es maschinentechnisch möglich, den eingeharzten Roving derart zuzuführen, dass auch in den konkav geformten Bereichen 11a des Kerns 11 ein Gelege entstehen kann. Die Zuführung des Rovings in diesen konkaven Bereichen 11a ist jedoch ohne Hilfseinrichtungen nur sehr schwer zu steuern und kann nicht mit der nötigen Vorspannung und damit mit einer guten Reproduzierbarkeit vonstattengehen.

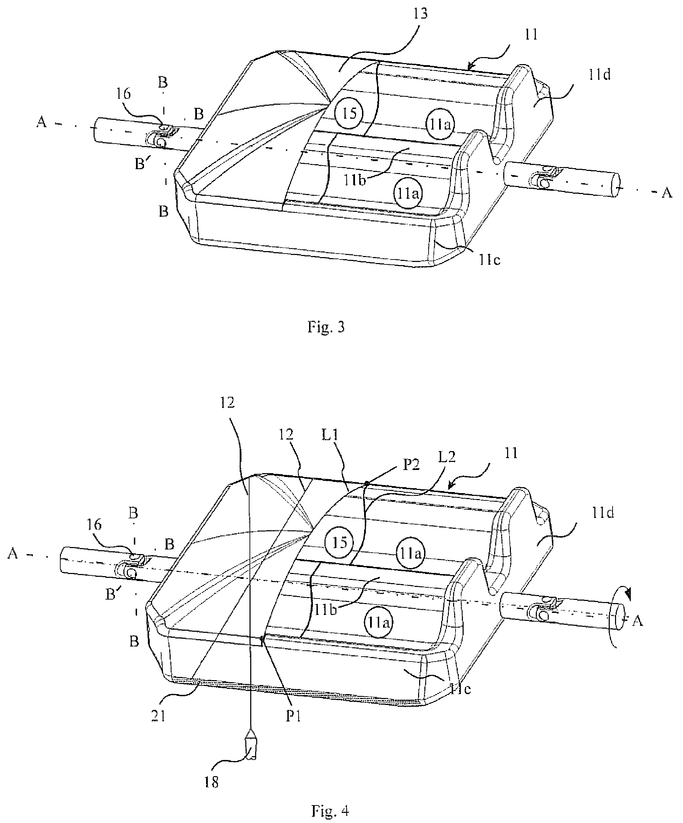

Um diesen Nachteil zu verbessern, weist der in Figur 3 dargestellte erfindungsgemäße Kern 11 eine Oberfläche mit mindestens einem formvariablen Bereich 13 auf. Wie in Figur 3 dargestellt, ist der formvariable Bereich 13 durch eine Folie 13 dargestellt, die an den Übergängen von den konvexen Flächen 11c zu den konkaven Flächen 11 a der Oberfläche mit dem Kern 11 verklebt ist. Im Sinne der Erfindung ist diese Kunststofffolie 13 ein Bestandteil des Kerns 11. Der Kern 11 umfasst folglich die Kunststofffolie 13 und das Kernbasiselement 11 d. Die Größe der Oberfläche der Kunststofffolie 13 ist so abgestimmt, dass ihr Wert dem Wert der Summe der Oberflächen der konkaven Bereiche 11 a und des konvexen Bereichs 11 b des Kernbasiselements 11d entsprechen. Die Kunststofffolie 13 bildet zusammen mit dem Kernbasiselement 11d einen Behälter 15 aus, der mit einem Fluid, insbesondere einem Gas wie Luft oder auch mit einer Flüssigkeit, insbesondere Wasser, befüllt und auch entleert werden kann. Das Volumen in dem Behälter 15 zwischen Kunststofffolie 13 und Kernbasiselement 11 d wird mit dem Fluid befüllt und mit Druck beaufschlagt, so dass der formvariable Bereich 13 nach außen hin eine konvex geformte Oberfläche aufweist. Diese Struktur ist dabei steif und belastbar, so dass sie mit Rovings bzw. imprägnierten Fasern umwickelt werden kann. In Figur 3 ist die Kunststofffolie 13 geschnitten dargestellt entlang einer Ebene, die zur Längsachse A des Kerns 11 senkrecht steht. Erfindungsgemäß soll die Kunststofffolie 13 bzw. der formvariable Bereich 13 den konkav ausgebildeten Bereich des Kernbasiselements 11d, der zumindest die konkaven Bereiche 11a und den konvexen Bereich 11 b umfasst, vollständig abdecken.

Das Innere des Behälters 15 ist mit einer Druck- bzw.

Unterdruckerzeugungseinrichtung verbunden. Durch Beaufschlagung des Behälterinneren mit Druck kann dieser-wie in den Figur 3 und 4 gezeigt - in eine Form überführt werden, in der er nach außen hin eine konvex gekrümmte Oberfläche aufweist. In diesem Zustand wird der Kern 11 - wie in Figur 4 dargestellt - mit Fasermaterial 12 umwickelt. Dieses Fasermaterial ist dabei bevorzugt als Roving ausgebildet, wobei die Faser mit einer aushärtbaren Kunststoffmatrix imprägniert ist. Mit Hilfe einer gesteuerten Zuführeinheit 18 wird der Kern 11 mit Fasermaterial 12 sukzessive umwickelt, bis eine gewünschte Wandstärke der Gelegelage erzielt wird.

Der Kern 11 wird dabei mit Hilfe zweier Kardanlagerungen 16 so in einer Wickelmaschine positioniert, dass er um seine Längsachse A drehbar und zusätzlich um zur Längsachse senkrecht stehende Schwenkachsen B rotierbar ist. Die kardanische Aufhängung 16 hat den Vorteil, dass man durch die Auslenkung eines Wellenendes in der Lage ist, alle Oberflächen des Kerns 11 im richtigen Winkel mit Fasern zu versehen. D.h. während des Umwickelns oder Umflechten des Kerns 11 wird dieser so durch Schwenkbewegungen zur Faser ausgerichtet, dass sich im Auftreffpunkt der Faser bzw. die Rovings auf die Oberfläche des Kerns 11 ein optimaler Winkel ergibt

Zur Erhöhung der Produktivität können auch mehrere Zuführeinheiten 18 verwendet werden. Dadurch eröffnet sich zudem die Möglichkeit, nicht nur gewickelte Strukturen, sondern auch gewebte oder geflochtene Faserstrukturen zu erzeugen, wenn mehrere Zuführeinheiten unterschiedliche Bewegungen zueinander durchführen. Im Sinne der Erfindung ist folglich der Kern nicht ausschließlich als ein zu umwickelnder Kern zu verstehen, sondern auch als ein Kern oder Dorn, der mit einer Faser in Form von Gelege, Gewebe oder Geflecht versehen werden kann.

Nachdem der in Figur 4 dargestellte Wickelvorgang beendet ist, wird das vorher zugeführte Fluid wieder aus dem Inneren des Behälters 15 abgesaugt und in dem Behälter 15 Unterdruck erzeugt. Durch diesen Unterdruck wird die konvexe Oberfläche des Teilbereichs 13 in eine konkave Oberfläche überführt, wobei sich die Kunststofffolie 13 an die Oberfläche der konkaven Bereiche 11 a und des konvexen Bereichs 11 b anlegt. Der mit Fasern 12 versehene Teilbereich 13 dringt somit in den konkaven Bauteilbereich des Kerns 11 ein, wobei die Kunststofffolie 13 zwischen dem Kern 11 und den Fasern 12 eingeschlossen wird. Der konkave Bauteilbereich umfasst die konkaven Bereich 11 a und den konvexen Bereich 11 b des Kernbasiselements.

Die Länge einer geodätischen Linie des formvariablen Bereich 13 in konvexer Form entspricht der Länge derselben geodätischen Linie des formvariablen Bereich 13 in konkaver Form. Mit anderen Worten: die Länge des Abstandes vom Punkt P1 zu Punkt P2 in Figur 4 entlang der oberen Linie L1 entspricht dabei der Länge des Abstandes von Punkt P1 zum Punkt P2 entlang der in Figur 4 dargestellten unteren Linie L2. Dadurch kann sichergestellt werden, dass die Kunststofffolie 13 sich beim Anlegen an die Oberfläche des konkaven Bauteilbereichs exakt an dessen Oberfläche anlegt, ohne dass die Fasern 12 unter Spannungen stehen oder Verwerfungen bilden.

Auf einer dem Kernbasiselement 11 d zugewandten Seite der Kunststofffolie 13 ist diese optional mit Klebstoff beschichtet, so dass ein stabiler Klebeverbund zwischen der Kunststofffolie 13 und dem Kernbasiselement 11d entsteht.

Das so entstandene Halbzeug wird zum Aushärten mit Druck und/oder Hitze beaufschlagt. Beispielsweise kann es mit Hilfe von Unterdruck in einem Autoklaven ausgehärtet werden, wobei die Kunststoffmatrix des Rovings aushärtet.

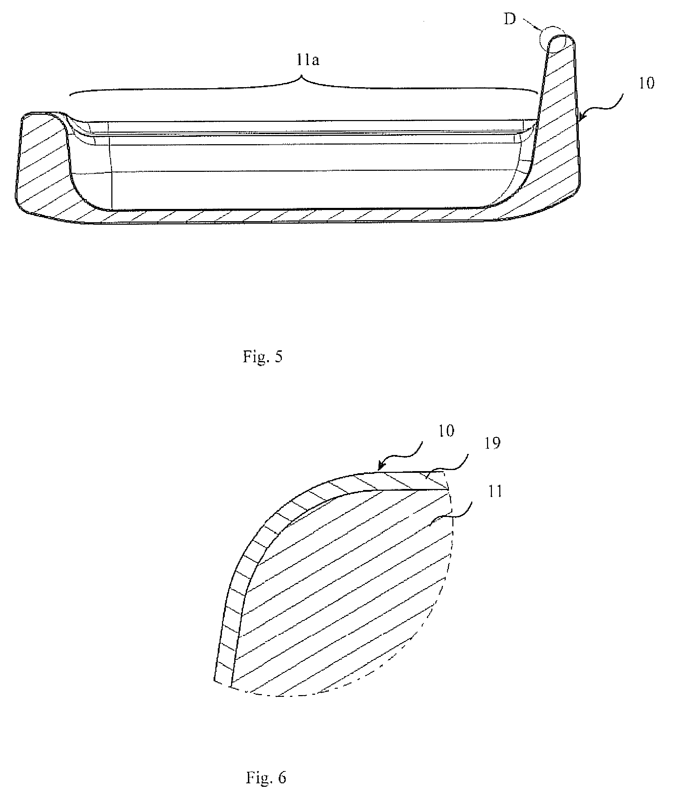

Ein solches Chassis bzw. Kunststoffbauteil 10 ist in einer Schnittansicht entlang einer Längsachse des Kunststoffbauteils 10 in Figur 5 dargestellt. Zur besseren Übersichtlichkeit ist das Detail D aus Figur 5 in Figur 6 vergrößert dargestellt. Wie daraus ersichtlich ist, umfasst das Kunststoffbauteil 10 den Kern 11 und eine faserverstärkte Kunststoffschicht 19. Alternativ dazu kann in einer weiteren, nicht dargestellten Ausführungsform der Erfindung der Kern 11 aus dem fertigen Bauteil nach dem Aushärteprozess entfernt werden. Das dann entstehende Kunststoffbauteil 10 weist folglich eine hohle faserverstärkte Kunststoffschicht 19 auf.

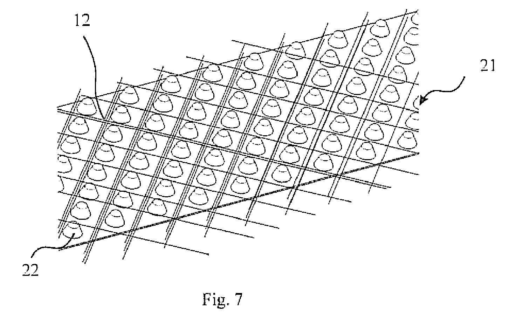

Bezugnehmend auf Figur 4 sind erfindungsgemäß an dem Kern 11 Positionierungsmittel 21 vorgesehen. Diese Positionierungsmittel 21 sind in Figur 7 vergrößert dargestellt. Sie sind beispielhaft als Noppenbänder ausgeführt, die an den Umlenkpunkten, d.h. beispielsweise den Kanten des Kerns 11, angebracht sind, um die Fasern 12 während des Umwickelns oder Umflechten des Kerns 11 zu positionieren und zu halten. Dadurch kann auf besonders einfache Weise erreicht werden, dass vor allem die ersten Gelege bzw. Gewebelagen in Form gehalten werden. Die nach außen gerichtete Oberfläche, d.h. die dem Wickelgrundträger 11d abgewandte Oberfläche der Kunststofffolie 13 kann optional ebenfalls mit Positionierungsmittel 21 versehen sein. Dabei kann die Oberfläche der Kunststofffolie 13 teilweise oder vollständig mit einer Noppenstruktur bzw. den Noppenbändern versehen sein.

## Patentansprüche

1. Verfahren zum Herstellen eines Bauteils (10) aus faserverstärken Kunststoff mit den Schritten:
- Anordnung eines Kernes (11) in einer Faseraufbringvorrichtung insbesondere in einer Wickel- oder Flechtvorrichtung,
- Aufbringen von Fasern (12) auf den Kern (11), wobei die Fasern (12) mit einer Kunststoffmatrix imprägniert sind,
- und Aushärten der Kunststoffmatrix durch Beaufschlagen des mit Fasern (12) versehenen Kernes (11) mit Druck und/oder Temperatur,
**dadurch gekennzeichnet, dass**
- der Kern (11) eine Oberfläche mit mindestens einem formvariablen Bereich (13) aufweist, der während des Aufbringens der Fasern (12) eine erste vorbestimmte geometrische Form aufweist und nach dem Aufbringen der Fasern (12) in eine zumindest abschnittsweise konkave geometrische Form überführt wird.

2. Verfahren nach Anspruch 1,
**dadurch gekennzeichnet, dass**
- der formvariable Bereich (13) der Oberfläche des Kernes (11) während des Aufbringens der Fasern (12) zumindest abschnittsweise eine konvexe geometrische Form aufweist und während des Aushärtens der Kunststoffmatrix eine zumindest abschnittsweise konkave Form aufweist.

3. Verfahren nach einem der Ansprüche 1 oder 2, **dadurch gekennzeichnet, dass**
- der formvariable Bereich (13) der Oberfläche durch einen im Wesentlichen fluiddichten Behälter ausgebildet wird, der an dem Kern (11) angeordnet und in dem ein Fluid vorgesehen ist und dass
- durch Beaufschlagen des Fluids mit Druck der Behälter in eine zumindest abschnittsweise konvexe äußere Form überführt wird und durch Erzeugen von Unterdruck der Behälter in eine zumindest abschnittsweise konkave äußere Form überführt wird.

4. Verfahren nach einem der vorhergehenden Ansprüche, **dadurch gekennzeichnet, dass**
- die Länge einer geodätische Linie (L1) des formvariablen Bereichs (13) der Oberfläche in konvexer Form der Länge einer geodätischen Linie (L2) des Bereichs (13) der Oberfläche in konkaver Form entspricht.

5. Verfahren nach einem der vorhergehenden Ansprüche, **dadurch gekennzeichnet, dass**
- an dem Kern (11) mindestens ein Positionierungsmittel (15) vorgesehen ist zum Positionieren mindestens eines Abschnitts der Fasern (12) während des Aufbringens der Fasern (12) auf den Kern (11).

6. Vorrichtung zur Herstellung eines Bauteils (10) aus faserverstärkten Kunststoff, mit einem Kern (11), dessen Oberfläche mindestens einen formvariablen Bereich (13) aufweist, wobei auf den Kern (11) Fasern (12) aufbringbar sind,
**dadurch gekennzeichnet, dass**
der formvariablen Bereich (13) während des Aufbringens der Fasern (12) eine erste vorbestimmte geometrische Form aufweist und nach dem Aufbringen der Fasern (12) in eine zumindest abschnittsweise konkave geometrische Form überführbar ist.

7. Vorrichtung nach Anspruch 6,
**dadurch gekennzeichnet, dass**
der formvariable Bereich (13) des Kerns (11) aus einem im Wesentlichen fluiddichten Behälter (15) ausgebildet ist.

8. Vorrichtung nach Anspruch 7, **dadurch gekennzeichnet, dass** in dem fluiddichten Behälter (15) ein Fluid vorgesehen ist, und dass durch Beaufschlagen des Fluids mit Druck, der formvariable Bereich (13) in eine zumindest abschnittsweise konvexe Form und durch Erzeugen von Unterdruck der formvariable Bereich (13) in eine zumindest abschnittsweise konkave Form überführbar ist.

9. Vorrichtung nach einem der vorhergehenden Ansprüche, **dadurch gekennzeichnet, dass**
- die Länge einer geodätische Linie des formvariablen Bereichs (13) in konvexer Form, der Länge derselben geodätischen Linie des formvariablen Bereichs (13) in konkaver Form entspricht.

10. Vorrichtung nach einem der vorhergehenden Ansprüche, **dadurch gekennzeichnet, dass**
- an dem Kern (11) ein Positionierungsmittel (15) vorgesehen ist zum Positionieren mindestens eines Abschnitts der Fasern (12) während des Aufbringens der Fasern (12) auf den Kern (11).
